# EUROPÄISCHE PATENTSCHRIFT

(11) **EP 3 274 481 B1**
(45) Veröffentlichungstag und Bekanntmachung des Hinweises auf die Patenterteilung: **14.08.2019**
(21) Anmeldenummer: 16708360.9
(22) Anmeldetag: 08.03.2016
(51) Int. Cl.: C22C 9/04, F16C 33/04

(54) **KUPFER-ZINK-LEGIERUNG UND DEREN VERWENDUNG**
COPPER-ZINC ALLOY AND USE THEREOF
ALLIAGE CUIVRE-ZINC ET SON UTILISATION

(30) Priorität: 24.03.2015 DE 102015003687
(43) Veröffentlichungstag der Anmeldung: 31.01.2018
(73) Patentinhaber: Diehl Metall Stiftung & Co. KG, 90552 Röthenbach (DE)
(72) Erfinder: GAAG, Norbert, 91207 Lauf (DE)
(74) Vertreter: Diehl Patentabteilung
(86) Internationale Anmeldenummer: PCT/EP2016/000404
(87) Internationale Veröffentlichungsnummer: WO 2016/150551

(56) Entgegenhaltungen:
- EP-A2- 1 712 648
- EP-A2- 2 806 044
- CN-A- 102 337 421
- CN-A- 102 851 533
- JP-A- S56 127 741
- US-A1- 2014 259 674

## Beschreibung

Die Erfindung betrifft eine Kupfer-Zink-Legierung sowie eine Verwendung einer solchen Legierung.

Die DE 10 2007 063 643 A1 offenbart eine Kupfer-Zink-Legierung, welche sich durch einen hohen Widerstand gegen abrasiven Verschleiß auszeichnet.

Aus der DE 10 2005 015 467 A1 ist eine weitere Kupfer-Zink-Legierung zur Verwendung als Werkstoff für ein Gleitlager bekannt. Die Legierung weist eine gute Temperatur- und Verschleißbeständigkeit auf.

Weitere Kupfer-Zink-Legierungen sind aus der US 2014/0259674 A1 sowie der CN 102337421 A1 bekannt.

In der Praxis hat es sich gezeigt, dass die vorgenannten Kupfer-Zink-Legierungen insbesondere zur Herstellung von Lagerbuchsen für Turbolader nur bedingt geeignet sind. Solche Lagerbuchsen müssen mit einer Toleranz von wenigen µm gefertigt werden. Eine solche Toleranz kann mit herkömmlichen Kupfer-Zink-Legierungen nicht immer eingehalten werden, weil die Oberflächenrauigkeit spanabhebend bearbeiteter Oberflächen mitunter zu groß ist.

Aufgabe der Erfindung ist es, die Nachteile nach dem Stand der Technik zu beseitigen. Es soll insbesondere eine Kupfer-Zink-Legierung angegeben werden, welche eine Fertigung von Lagerbuchsen mit einer verminderten Oberflächenrauigkeit ermöglicht.

Diese Aufgabe wird durch die Merkmale der Patentansprüche 1, 4 und 5 gelöst. Zweckmäßige Ausgestaltungen der Erfindung ergeben sich aus den Merkmalen der Patentansprüche 2, 3 und 6.

Nach Maßgabe der Erfindung wird eine Kupfer-Zink-Legierung vorgeschlagen, umfassend 62,5 bis 64,5% Cu, 2,7 bis 3,5% Mn, 1,3 bis 1,9% AI, 0,8 bis 1,2% Si, 0,3 bis 0,6% Fe, 0 bis 1,0% Pb, 0 bis 1,5% Ni, 0 bis 0,2% Sn, Rest Zn sowie unvermeidbare Verunreinigungen.

Alle Angaben in "%" beziehen sich auf "Gewichtsprozent".

Die vorgeschlagene Kupfer-Zink-Legierung weist eine hervorragende Temperaturbeständigkeit auf. Mittels einer spanabhebenden Bearbeitung hergestellte Oberflächen weisen eine erheblich verminderte Oberflächenrauigkeit auf. Die vorgeschlagene Kupfer-Zink-Legierung eignet sich besonders gut zur Herstellung von Lagerbuchsen, insbesondere Lagerbuchsen für Turbolader. Die Kupfer-Zink-Legierung kann mittels Strangpressen, Ziehen, Gießen sowie Kalt- und Warmverformung, z. B. Strangpressen, Ziehen und Entspannungsglühung, verarbeitet werden.

Insbesondere kann die Kupfer-Zink-Legierung 63,0 bis 64,0% Cu, 2,9 bis 3,2% Mn, 1,4 bis 1,9% AI, 0,5 bis 0,7% Ni enthalten.

In einer besonders bevorzugten Ausgestaltung wird auf den Legierungsbestandteil Pb und/oder Sn verzichtet.

Die erfindungsgemäße Kupfer-Zink-Legierung weist eine elektrische Leitfähigkeit von vorzugsweise mehr als 9,0 m/Ohm mm². Die elektrische Leitfähigkeit korreliert zur Wärmeleitfähigkeit. Die vorgeschlagene Legierung zeichnet sich durch eine besonders hohe Wärmeleitfähigkeit von mehr als 60 W/mK bei Raumtemperatur aus.

Ferner betrifft die Erfindung ein Gleitlager, hergestellt aus der vorgeschlagenen Kupfer-Zink-Legierung, wobei im Gusszustand im Gefüge enthaltene intermetallische Verbindungen eine Größe von höchstens 150 µm aufweisen. Die geringe Größe der intermetallischen Verbindungen trägt vorteilhafterweise dazu bei, dass bei einer spanabhebenden Bearbeitung eine Oberfläche mit einer verminderten Oberflächenrauigkeit hergestellt werden kann. Nach weiterer Maßgabe der Erfindung wird die vorgeschlagene Kupfer-Zink-Legierung zur Herstellung einer Lagerbuchse für ein Gleitlager, insbesondere eine Turbolader-Lagerbuchse, verwendet.

Nachfolgend wird ein Beispiel der vorgeschlagenen Kupfer-Zink-Legierung näher erläutert.

Die Kupfer-Zink-Legierung kann die folgende Zusammensetzung aufweisen:
Cu 64,2%
Mn 2,0%
Al 1,8%
Si 1,3%
Fe 0,8%
Ni 0,8%
Zn Rest

Aus der nachfolgenden Tabelle sind mechanische Eigenschaften der Kupfer-Zink-Legierung ersichtlich.

**Tabelle 1:**

| Rₘ (N/mm²) | R_{p0,2} (N/mm²) | A(%) | Härte (HBW 2,5/62,5) |
|---|---|---|---|
| 515 | 286 | 25 | 167 |

Die Kupfer-Zink-Legierung weist die in der nachfolgenden Tabelle wiedergegebenen physikalischen Eigenschaften auf.

**Tabelle 2:**

| Eigenschaft | |
|---|---|
| Dichte g/cm³ | 8,1 |
| Elektrische Leitfähigkeit m/Ohm mm² | 9,3 |
| E-Modul kN/mm² | 131 |
| Thermische Längenausdehnungskoeffizient | 15,7 |
| Querkontraktionszahl | 0,39 |

Die Warmzugfestigkeit der Kupfer-Zink-Legierung beträgt bei 350°C etwa 321 N/mm². Die Kupfer-Zink-Legierung zeichnet sich durch ein hervorragendes Erweichungsverhalten aus. Zur Ermittlung des Erweichungsverhaltens ist die Legierung bei einer Glühzeit von 1 Stunde Temperaturen von bis zu 500°C ausgesetzt worden. Es zeigt sich, dass bis zu einer Temperatur von 500°C keinerlei Verminderung der Härte gegenüber der Härte gegenüber der Härte bei Raumtemperatur zu beobachten ist. Selbst bei einer Temperaturbehandlung von 600°C beträgt die Härteabnahme weniger als 10% der Ausgangshärte bei Raumtemperatur.

Nachfolgend wird ein Ausführungsbeispiel der Erfindung anhand der Zeichnungen näher erläutert. Es zeigen:
- Fig. 1: ein Gefügebild der erfindungsgemäßen Kupfer-Zink-Legierung,
- Fig. 2: eine Querschnittsansicht einer spanabhebend bearbeiteten Oberfläche der Kupfer-Zink-Legierung und
- Fig. 3: eine Querschnittsansicht einer spanabhebend bearbeiteten Oberfläche einer herkömmlichen Kupfer-Zink-Legierung.

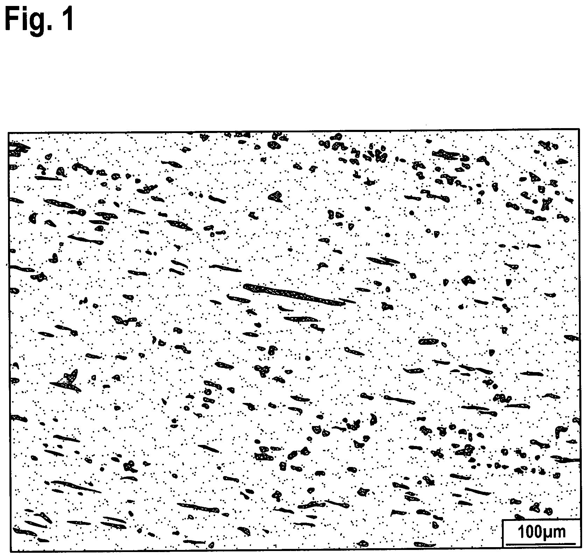

Fig. 1 zeigt ein Gefügebild der erfindungsgemäßen Kupfer-Zink-Legierung. Daraus ist ersichtlich, dass eine maximale Größe der intermetallischen Verbindungen (dunkle Kristalle) in einer Längserstreckungsrichtung der Kristalle maximal 150 mm beträgt.

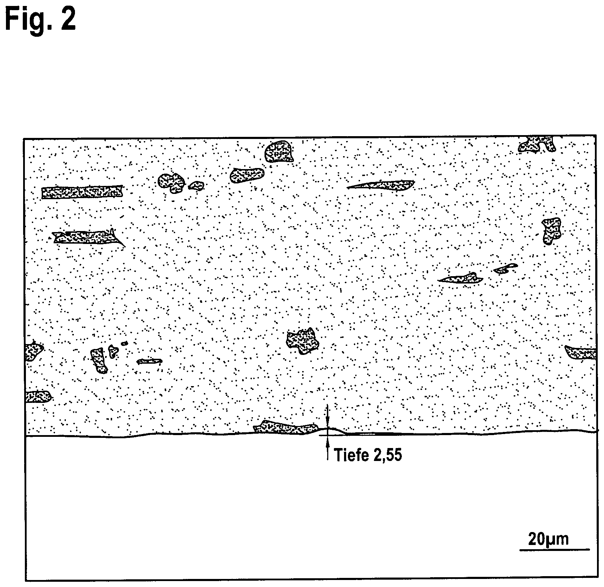

Fig. 2 zeigt eine Querschnittsansicht durch eine Oberfläche eines aus der Kupfer-Zink-Legierung hergestellten Bauteils, wobei die Oberfläche spanabhebend bearbeitet worden ist. Wie aus Fig. 2 ersichtlich ist, treten Abweichungen an der Oberfläche im Bereich von intermetallischen Verbindungen auf. Die Abweichungen haben eine maximale Tiefe von etwa 2,55 µm.

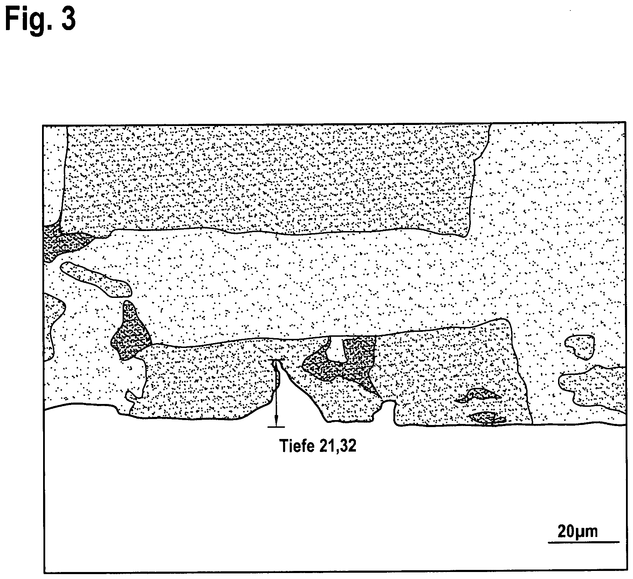

Fig. 3 zeigt zum Vergleich eine Querschnittsansicht durch eine spanabhebend bearbeitete Oberfläche eines Bauteils, welches aus einer herkömmlichen Kupfer-Zink-Legierung (70,5% Cu, 7,8% Mn, 5,2% Al, 2,0% Si, 1,0% Fe, Rest Zn und vermeidbare Verunreinigungen) hergestellt worden ist. Hier treten an der Oberfläche Abweichungen auf, welche eine Tiefe von mehr als 20 µm haben.

Mit der erfindungsgemäßen Kupfer-Zink-Legierung können also Bauteile hergestellt werden, welche bei einer spanabhebenden Bearbeitung deutlich kleinere Abweichungen an der Oberfläche aufweisen als Bauteile, welche aus einer herkömmlichen Kupfer-Zink-Legierung hergestellt worden sind. Es können mit der erfindungsgemäßen Kupfer-Zink-Legierung Lagerbuchsen mit einer verbesserten Oberflächenqualität, insbesondere bei spanabhebender Bearbeitung, hergestellt werden. Die erfindungsgemäße Kupfer-Zink-Legierung eignet sich auf Grund ihrer ausgezeichneten thermischen Eigenschaften insbesondere zur Herstellung von Lagerbuchsen für Turbolader.

## Patentansprüche

1. Kupfer-Zink-Legierung, umfassend 62,5 bis 64,5% Cu, 2,7 bis 3,5% Mn, 1,3 bis 1,9% Al, 0,8 bis 1,2% Si, 0,3 bis 0,6% Fe, 0 bis 1,0% Pb, 0 bis 1,5% Ni, 0 bis 0,2% Sn, Rest Zn sowie unvermeidbare Verunreinigungen.

2. Kupfer-Zink-Legierung nach Anspruch 1, enthaltend 63,0 bis 64,0% Cu, 2,9 bis 3,2% Mn, 1,4 bis 1,9% AI, 0,5 bis 0,7% Ni.

3. Kupfer-Zink-Legierung nach einem der vorhergehenden Ansprüche mit einer elektrischen Leitfähigkeit von mehr als 9,0 m/Ohm mm².

4. Lagerbuchse für ein Gleitlager, hergestellt aus einer Kupfer-Zink-Legierung nach einem der vorhergehenden Ansprüche, wobei im Gusszustand im Gefüge enthaltene intermetallische Verbindungen eine Größe von höchstens 150 µm aufweisen.

5. Verwendung der Kupfer-Zink-Legierung nach einem der Ansprüche 1 bis 3 zur Herstellung einer Lagerbuchse für ein Gleitlager.

6. Verwendung nach Anspruch 5, wobei die Lagerbuchse eine Turbolader-Lagerbuchse ist.

## Claims

1. Copper-zinc alloy comprising 62.5 to 64.5% Cu, 2.7 to 3.5% Mn, 1.3 to 1.9% Al, 0.8 to 1.2% Si, 0.3 to 0.6% Fe, 0 to 1.0% Pb, 0 to 1.5% Ni, 0 to 0.2% Sn, balance Zn and unavoidable impurities.

2. Copper-zinc alloy according to Claim 1 containing 63.0 to 64.0% Cu, 2.9 to 3.2% Mn, 1.4 to 1.9% Al, 0.5 to 0.7% Ni.

3. Copper-zinc alloy according to either of the preceding claims having an electrical conductivity of more than 9.0 m/ohm mm².

4. Bearing bushing for a plain bearing, produced from a copper-zinc alloy according to any of the preceding claims, wherein in the cast state intermetallic compounds present in the microstructure have a size of not more than 150 µm.

5. Use of the copper-zinc alloy according to any of Claims 1 to 3 for producing a bearing bushing for a plain bearing.

6. Use according to Claim 5, wherein the bearing bushing is a turbocharger bearing bushing.

## Revendications

1. Alliage cuivre-zinc, comprenant 62,5 à 64,5% de Cu, 2,7 à 3,5% de Mn, 1,3 à 1,9% de Al, 0,8 à 1,2% de Si, 0,3 à 0,6% de Fe, 0 à 1,0% de Pb, 0 à 1,5% de Ni, 0 à 0,2% de Sn, le reste étant du Zn ainsi que des impuretés inévitables.

2. Alliage cuivre-zinc selon la revendication 1, contenant 63,0 à 64,0% de Cu, 2,9 à 3,2% de Mn, 1,4 à 1,9% de Al, 0,5 à 0,7% de Ni.

3. Alliage cuivre-zinc selon l'une des revendications précédentes doté d'une conductivité électrique supérieure à 9,0 m/Ω.mm².

4. Douille de palier pour un palier lisse, fabriqué à partir d'un alliage cuivre-zinc selon l'une des revendications précédentes, les composés intermétalliques contenus dans la texture à l'état de coulée présentant une grosseur d'au plus 150 µm.

5. Utilisation de l'alliage cuivre-zinc selon l'une des revendications 1 à 3 pour la fabrication d'une douille de palier pour un palier lisse.

6. Utilisation selon la revendication 5, la douille de palier étant une douille de palier de turbocompresseur.
